# EUROPÄISCHE PATENTSCHRIFT

(11) **EP 1 905 380 B1**
(45) Veröffentlichungstag und Bekanntmachung des Hinweises auf die Patenterteilung: **14.01.2009**
(21) Anmeldenummer: 06020339.5
(22) Anmeldetag: 28.09.2006
(51) Int. Cl.: A61C 13/00, B29C 51/46

(54) **Dental-Druckformgerät und Betriebsverfahren**
Dental press forming apparatus and operating method
Appareil dentaire de formage sous pression et procédé de fonctionnement

(43) Veröffentlichungstag der Anmeldung: 02.04.2008
(73) Patentinhaber: ERKODENT Erich Kopp GmbH, 72285 Pfalzgraffenweiler (DE)
(72) Erfinder: Kopp, Hans-Peter, 72285 Pfalzgrafenweiler (DE)
(74) Vertreter: Klocke, Peter

(56) Entgegenhaltungen:
- DE-A1- 2 162 129
- DE-A1- 10 307 688
- US-A1- 3 788 382
- US-A1- 4 933 126

## Beschreibung

Die vorliegende Erfindung betrifft eine Dental-Druckformvorrichtung zum Einsatz in der dentalen Tiefziehtechnik mit einem Gehäuse zur Aufnahme eines Formtopfes zur Modellaufnahme, einer Einspannvorrichtung für Tiefziehfolien mit einer ringförmigen Halterung zur Aufnahme der Tiefziehfolie, einer Heizeinrichtung zum Erwärmen der Tiefziehfolien, wobei die Einspannvorrichtung zumindest zwischen einer Heizstellung unter der Heizeinrichtung und einer Tiefziehstellung über dem Formtopf bewegbar ist, sowie mindestens einem Temperaturfühler und einer elektronischen Steuer/Regeleinrichtung. Die Erfindung betrifft außerdem ein Verfahren zum Betreiben einer derartigen Dental-Druckformvorrichtung.

Zur Herstellung von Dentalprodukten wie Schienen, Prothesen, kieferorthopädischen Korrekturmitteln oder Kieferschutz-Vorrichtungen wird die Tiefziehtechnik angewendet. Dabei wird eine Folie oder Platte aus einem thermoplastischen Werkstoff erhitzt, über einen als Modell dienenden Positivabdruck des Kiefers positioniert und anschließend unter Druckeinwirkung in das Kiefermodell tiefgezogen. Zur Durchführung dieses Verfahrens werden sogenannte Druckformgeräte verwendet.

Wesentliche Bestandteile dieser Druckformgeräte sind eine Druckkammerbasis mit einem Formtopf zur Modellaufnahme, eine schwenkbare Einspannvorrichtung für die Tiefziehfolien, die als Druckkammerdeckel wirkt, und ein Heizstrahler, der ebenfalls schwenkbar ausgebildet sein kann, sowie die erforderlichen Druckaggregate. Die Tiefziehfolie oder -platte wird in einer ringförmigen Halterung der Einspannvorrichtung eingespannt, wobei die ringförmige Halterung kreisringförmig oder auch quadratisch ausgebildet sein kann. Mittels des Heizstrahlers wird die Folie erhitzt und bei Erreichen der erforderlichen Bearbeitungstemperatur die Tiefziehfolie in bekannter Art und Weise in das Kiefermodell tiefgezogen. Dies kann entweder mit Überdruck oder mit Unterdruck durchgeführt werden. Beide Varianten abdeckend werden hier daher der Begriff Druckformgerät verwendet.

Druckformgeräte der eingangs genannten Art sind beispielsweise aus der DE 195 11 064 A1 bekannt. Ähnliche Druckformgeräte sind in den Druckschriften DE 1835492 U und DE 3214043 A1 beschrieben. Bei den bekannten Druckformgeräten wird in der zuvor beschriebenen Weise die zu formende Tiefziehfolie vor dem Tiefziehvorgang mittels eines Heizstrahlers plastifiziert. Nach dem Plastifizierungsvorgang wird die Tiefziehfolie mittels einer geeigneten Druckkammer über ein Kiefermodell unter Erzeugung eines Über oder Unterdrucks tiefgezogen.

Bei diesen Druckformgeräten erfolgt der Plastifizierungsvorgang mehr oder weniger unkontrolliert, so dass die bei den Geräten erzielten Arbeitsergebnisse abhängig von den schwankenden Umgebungsbedingungen (Temperatur, Zugluft, Feuchtigkeit, Spannungsschwankungen) eine veränderliche Qualität haben und schlecht reproduzierbar sind. Üblicherweise wird vom Hersteller in Abhängigkeit von der Art der Tiefziehfolie unter optimalen Laborbedingungen die Zeit ermittelt, die üblicherweise erforderlich ist, um die Tiefziehfolie auf die gewünschte Tiefziehtemperatur zu bringen. Da in der Praxis jedoch unterschiedliche Temperaturbedingungen herrschen können und auch die Einsatzdauer des Geräts eine Rolle spielt, schwanken diese Ergebnisse.

Für die Erwärmung der Tiefziehfolie haben sich sogenannte mittelwellige Infrarotstrahler bewährt. Bei diesen ist es erforderlich, dass sie auf eine ausreichende Betriebstemperatur gebracht werden, bevor sie in der vorstehend beschriebenen Art und Weise zum Einsatz gebracht werden können. Erst nach Erreichen der Betriebstemperatur des Infrarotstrahlers kann dieser über die Folie gebracht wer den, damit die von dem Hersteller des Geräts vorgegebenen Zeiträume annähernd zutreffen können. Je nach Automatisierungsgrad des Geräts kann hierzu auch ein entsprechendes Zeitprogramm abgespeichert sein. Aus der DE 103 07 688 A1 ist ein weiteres Druckformgerät gemäß dem Oberbegriff des Anspruchs 1 und des Verfahrenanspruchs 6 bekannt, das einen kurzwelligen Quarzrohrstrahler verwendet wird, der keine Aufheizzeit benötigt. Die kurzwellige Strahlung erfordert jedoch zusätzliche Filtermaßnahmen sowie Regelungeungen, um die schädigende Wirkung dieser Strahlung abzumildern. Darüber hinaus gewährleistet die kurzwellige Strahlung nicht unbedingt ein gleichmäßiges Durchwärmen der Tiefziehfolie, so dass unterschiedliche Temperaturen auf der Ober- und der Unterseite der Tiefziehfolie vorhanden sein können. Darüber hinaus ist der Energiebedarf dieser kurzwelligen Strahler erheblich höher als bei mittelwelligen Strahlern, welche nur 25 % der kurzwelligen Strahler benötigen. Dieses Druckformgerät misst mittels eines Temperaturmessfühlers kontinuierlich die gegenwärtige Temperatur im Bereich der Tiefziehfolie, beispielsweise an einem den Heizstrahler schützenden Gitter. Hier wird somit auch nur die Temperatur zwischen Strahler und Tiefziehfolie, also im Bereich der Tiefziehfolie, nicht jedoch die Temperatur der Tiefziehfolie gemessen. Aus diesen Messwerten wird dann mittels einer mikroprozessorgesteuerten Regelungseinrichtung, in der die Soll-Temperatur der Tiefziehfolie als eine Funktion der Zeit gespeichert ist, der Tiefziehvorgang gesteuert. Hier wird somit die auf die Tiefziehfolie auftreffende Temperatur erfasst und auf Grund der Zeit, die die Tiefziehfolie dem Strahler ausgesetzt ist, die Soll-Tiefiziehtemperatur ermittelt. Entsprechend den vorstehend beschriebenen Geräten ist damit auch keine genaue, den tatsächlichen Bedingungen entsprechende Temperaturerfassung möglich, da die gespeicherte Soll-Temperatur als Funktion der Zeit beim Hersteller unter optimalen Bedingungen ermittelt wird.

Aus der DE 36 10 349 A1 ist ein weiteres zahntechnisches Druckformgerät bekannt, bei dem der Plastifizierungsvorgang vollautomatisch überwacht wird. Hierzu dient eine komplexe elektromechanische Anordnung zur Vorstreckung der Tiefziehfolie, wobei in der Vakuumkammer der Vorrichtung eine optoetektronische Tasteinrichtung vorgesehen ist, die anspricht, wenn die Tiefziehfolie um ein vorgebbares Maß durchhängt.

Für die Erfassung des optimalen Verformungszeitpunktes weisen die bekannten Geräte somit für die unterschiedlichen Materialien und Materialstärken im Steuerungsprogramm hinterlegte Heizzeiten auf, die für das jeweilige Material aufgerufen werden. Diese Heizzeiten sind vom Hersteller unter optimalen Laborbedingungen festgelegt worden, so dass beim Verarbeiter nur annähernd gleiche Ergebnisse erzielbar sind, da äußere Einflüsse wie Raumtemperatur, Luftfeuchtigkeit, Luftbewegung und Spannungsschwankungen die Ergebnisse beeinflussen. Trotzdem sind mit dieser Technik auch unerfahrene Verarbeiter in der Lage, akzeptable Ergebnisse zu erzielen. Mit der weiteren Verbesserung durch das zusätzliche Erfassen der Lufttemperatur im Bereich zwischen Heizquelle und Tiefziehmaterial, mit der die Heizquelle geregelt wird, wird mit den hinterlegten Heizzeiten eine bessere Annäherung an die optimale Materialtemperatur erreicht. Auch mit dieser Technik kann nur auf die Temperatur der Tiefziehfolie zurückgeschlossen werden, ohne sie direkt zu erfassen. In der dentalen Tiefziehtechnik ist eine genaue Temperaturerfassung des Tiefziehmaterials der Weg zu möglichst geringem Schrumpf und trotzdem höchster Detailgenauigkeit des Endergebnisses.

Der vorliegenden Erfindung liegt daher die Aufgabe zu Grunde, eine Vorrichtung und ein Verfahren vorzuschlagen, mit denen die Temperatur des Tiefziehmaterials für den exakten Tiefziehzeitpunkt erfasst und damit der Tiefziehvorgang optimiert wird.

Diese Aufgabe wird erfindungsgemäß durch ein Dental-Druckformgerät mit den Merkmalen der Vorrichtungsansprüche sowie durch ein Verfahren zum Betreiben des Dental-Druckformgeräts mit den Merkmalen der Verfahrensansprüche gelöst. Weitere vorteilhafte Ausgestaltungen sind den jeweiligen rückbezogenen Unteransprüchen zu entnehmen.

Gemäß der Erfindung befindet sich unterhalb der Heizeinrichtung am Gehäuse ein Infrarotsensor als Temperaturfühler, der berührungslos die Temperatur der Tiefziehfolie erfasst und mit der Steuer/Regeleinrichtung verbunden ist. Mittels eines derartigen Temperaturfühlers ist es erstmals möglich, bei Dental-Druckforrnvorrichtungen, unabhängig davon, ob es sich um eine mit Überdruck oder Unterdruck arbeitende Vorrichtung handelt, die Temperatur der Tiefziehfolie tatsächlich zu erfassen und die gemessene Temperatur für die Steuerung des Bedienprogramms zu verwenden. Dies stellt einen einschneidenden Fortschritt gegenüber dem Stand der Technik dar, der die Tiefziehtemperatur immer über die Zeitdauer ermittelt hat. Damit kann die tatsächliche Temperatur fortlaufend mit der Soll-Tiefziehtemperatur verglichen werden und bei Erreichen der tatsächlichen folieneigenen Tiefziehtemperatur tiefgezogen werden.

Durch die erfindungsgemäße Anbringung des Infrarotsensors auf der dem Modell zugewandten Seite wird die tatsächlich wichtige Temperatur der Tiefziehfolie erfasst, da, wie vorstehend erwähnt, abhängig von der Strahlerwellenlänge unterschiedliche Temperaturen zwischen der Ober- und der Unterseite der Tiefziehfolie eintreten können.

Gemäß einer weiteren bevorzugten Ausbildung der Dental-Druckformvorrichtung befindet sich der Infrarotsensor seitlich versetzt zu der Senkrechten durch den Mittelpunkt der ringförmigen Halterung, wenn diese sich unter der Heizeinrichtung befindet. Damit wird sichergestellt, dass der Infrarotsensor nicht beschädigt wird, falls die Tiefziehfolie in dem plastifizierten Zustand tropft.

Besonders bevorzugt ist der Infrarotstrahler schräg angeordnet, so dass die Infrarotstahlerachse unter einem Winkel auf die von der Halterung gebildeten Einspannebene trifft. Vorzugsweise liegt der Winkel im Bereich von 12 bis 16°, besonders bevorzugt bei 14°. Diese Maßnahme gewährleistet eine möglichst genaue Messung dann, wenn es auf die Genauigkeit der Messung ankommt, nämlich wenn die Tiefziehfolie so weit erwärmt ist, dass der Tiefziehvorgang durchgeführt werden kann. Bei diesen Temperaturen hängt die Tiefziehfolie in der ringförmigen Halterung durch, so dass genau dann die Infrarotstrahlerachse senkrecht oder nahezu senkrecht auf die Tiefziehfolie trifft. Da die Messgenauigkeit des Infrarotsensors bei senkrechtem Auftreffen am höchsten ist, wird diese zu dem für den Tiefziehvorgang wichtigen Zeitpunkt gewährleistet. Solange die Folie kalt ist und noch stramm in der Halterung der Einspannvorrichtung sich befindet, trifft der Infrarotstrahl nicht senkrecht auf die Tiefziehfolie, so dass hier ein Messfehler entsteht, der jedoch zu diesem Zeitpunkt nicht gravierend ist.

Gemäß einer weiteren bevorzugten Ausbildung der Dental-Druckformvorrichtung trifft die Infrarotstrahlerachse in einem Ringbereich um den Mittelpunkt der auf die von der Halterung gebildeten Einspannebene, wobei vorzugsweise der Abstand zum Rand 25 % und zur Mitte 20 % des Abstandes vom Rand zur Mitte der Halterung beträgt. Es wurde festgestellt, dass außerhalb des Ringbereichs eine genaue Messung der Temperatur der Tiefziehfolie nicht möglich ist, d. h. mit Messfehlern behaftet ist. Dies liegt daran, dass am Rand zuviel Wärme durch die Halterung abfließt und in der Mitte die Folie nicht stabil ist, sondern sich zu sehr bewegt. Erfolgt die Messung jedoch in dem angegebenen Bereich, so kann mit zuverlässigen Messwerten gerechnet werden.

Gemäß dem Verfahren wird die Temperatur der Tiefziehfolie gemessen und mit der in der mikroprozessorgesteuerten Regelungseinrichtung für die betreffende Tiefziehfolie gespeicherten Verarbeitungstemperatur verglichen. Spätestens wenn die tatsächliche Temperatur mit der gespeicherten Soll-Tiefziehtemperatur der Tiefziehfolie übereinstimmt, wird entweder für das manuelle Tiefziehen ein Signal ausgelöst oder automatisch der Tiefziehvorgang durchgeführt.

Dabei wird vorzugsweise die Temperatur der Tiefziehfolie in dem Ringbereich um den Mittelpunkt der Tiefziehfolie in der Einspannvorrichtung gemessen, der sowohl vom Mittelpunkt als auch vom Rand der Einspannvorrichtung wie oben angegeben entfernt ist. Dies gilt sowohl bei runden als auch bei quadratischen ringförmigen Halterungen, wobei bei den quadratischen Halterungen der Abstand zum Seitenrand, nicht zu den Ecken zu nehmen ist.

Gemäß einer weiteren Ausbildung des Verfahrens, insbesondere für das manuelle Tiefziehen, wird vor Erreichen der Bearbeitungstemperatur der Tiefziehfolie ein akustisches und/oder optisches, vorzugsweise stärker werdendes Signal, vorzugsweise ab einer Differenz zu der Bearbeitungstemperatur von 10°C ausgegeben. Damit wird der Bediener schon vorzeitig auf das baldige Erreichen der Verarbeitungstemperatur hingewiesen.

Vorteilhafterweise wird die tatsächliche Temperatur der Tiefziehfolie, vorzugsweise auch die zu erreichende Verarbeitungstemperatur, über eine Anzeige sichtbar gemacht.

Durch das Verfahren ist es nun erstmals möglich, tatsächlich die Temperatur der Tiefziehfolie für den Tiefziehzeitpunkt bereitzustellen. Das ggf. abgegebene Signal wird somit auch bei Erreichen der Tiefziehtemperatur nicht auf Grund von einem Zeitablauf ausgegeben.

Die Temperatur wird sowohl bei runden als auch bei quadratischen Tiefziehplatten und -folien vorzugsweise nicht in der Mitte und nicht am Rand des jeweiligen Materials gemessen, sondern vorzugsweise in einer ringförmigen Fläche, die einen Abstand zum Rand und zur Mitte hat.

Mit dem erfindungsgemäßen Dental-Druckformgerät und dem Verfahren wird somit eine Möglichkeit angegeben, mit der unabhängig von äußeren Einflüssen wie beispielsweise Raumtemperatur, Luftfeuchtigkeit, Luftbewegung und Spannungsschwankungen der optimale Tiefziehzeitpunkt angezeigt und ggf. bei diesem automatisch der Tiefziehvorgang durchgeführt wird.

Weitere Merkmale und Vorteile der Erfindung ergeben sich aus der folgenden Beschreibung eines Ausführungsbeispiels der Erfindung in Verbindung mit den Ansprüchen und den Zeichnungen. Die einzelnen Merkmale können je für sich oder zu mehreren bei Ausführungsformen der Erfindung verwirklicht sein. Es stellen dar:
- Figur 1: eine perspektivische Seitenansicht einer Dental-Druckformvorrichtung mit einer Spannvorrichtung für die Tiefziehfolie in der Tiefziehstellung;
- Figur 2: eine perspektivische Aufriss-Frontansicht der Dental-Druckformvorrichtung mit der Einspannvorrichtung in der Heizstellung;
- Figur 3: eine prinzipielle Darstellung der Anordnung des Infrarotsensors relativ zu der Tiefziehfolie in der-Einspannvorrichtung im kalten Zustand der Tiefziehfolie;
- Figur 4: eine Darstellung gemäß Figur 3 mit einer erwärmten Tiefziehfolie; und
- Figur 5: eine Draufsicht auf den ringförmigen Messbereich für den Infrarotsensor.

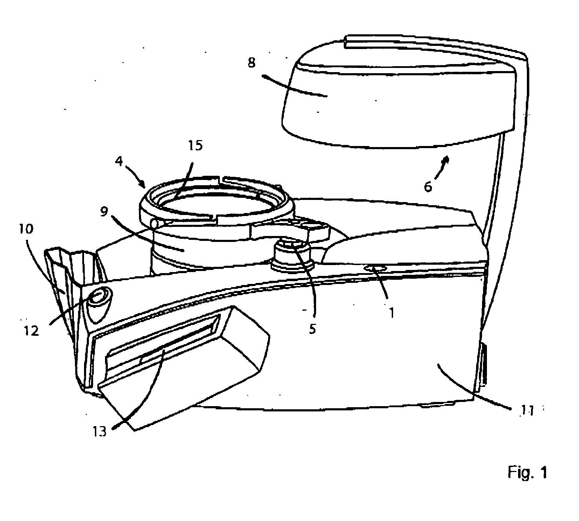

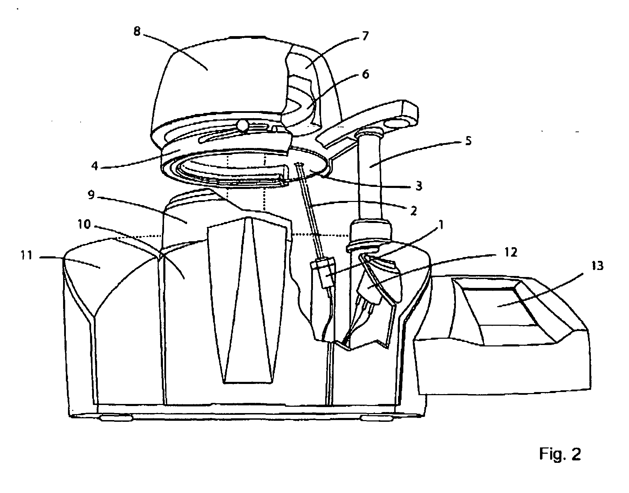

Die Figuren 1 und 2 zeigen als Ausführungsbeispiel ein mit Unterdruck arbeitendes Dental-Druckformgerät (Vakuumtiefziehgerät), bei dem nur die Einspannvorrichtung 4 beweglich ausgebildet ist und zwischen einer Tiefziehstellung über dem Formtopf 9 und einer Heizstellung unter dem Heizstrahler 6 bewegt werden kann. Darüber hinaus kann die Einspannvorrichtung 4 noch für die Beladung seitlich neben den Strahler 6 geschwenkt werden. Hierzu ist die Spannvorrichtung 4 von einer teleskopierbaren und schwenkbaren Säule 5 gehalten.

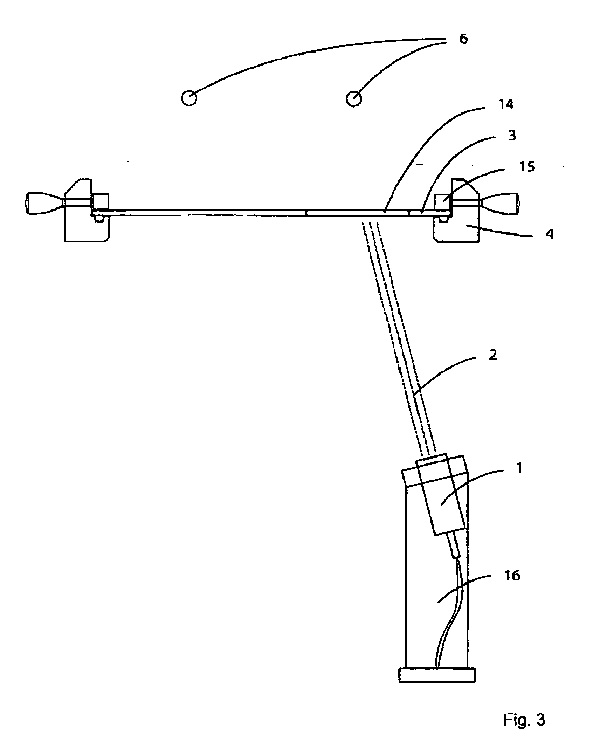

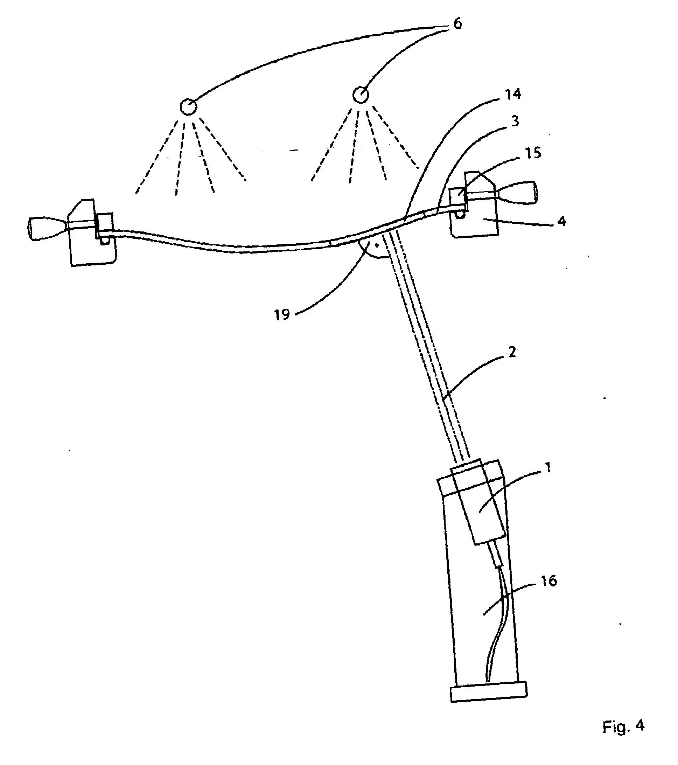

Wie aus den Figuren 1 und 2 ersichtlich, befinden sich in dem Gerätegehäuse 11 ein Formtopf 9 mit einem herausklappbaren und entnehmbaren Granulatbecher 10. An dem Gehäuse 11 befindet sich der Hauptschalter 12 sowie daran angeflanscht ein Bedienpanel 13 in Form einer Bildschirmtastatur (touch screen), die mit einer nicht dargestellten mikroprozessorgesteuerten Regeleinrichtung verbunden ist. In der Figur 2 befindet sich die Spannvorrichtung 4 mit dem Spannring 15 (Figur 3 und 4) als Halterung für das Tiefziehmaterial in der Heizstellung direkt unter einem mittelwelligen Infrarotstrahler 6 als Heizquelle, der sich im Inneren 7 eines fest mit dem Gehäuse 11 verbundenen Strahlergehäuse(s) befindet. In dem Gehäuse 11 befindet sich, geneigt angeordnet, ein Infrarotsensor 1 mit einer Infrarotmesswelle 2, die im Ausführungsbeispiel entsprechend der Infrarotsensorachse angeordnet ist. Die Infrarotmessungswelle 2 trifft unter einem Winkel von 14° auf die von dem Spannring 15 gebildete Ebene.

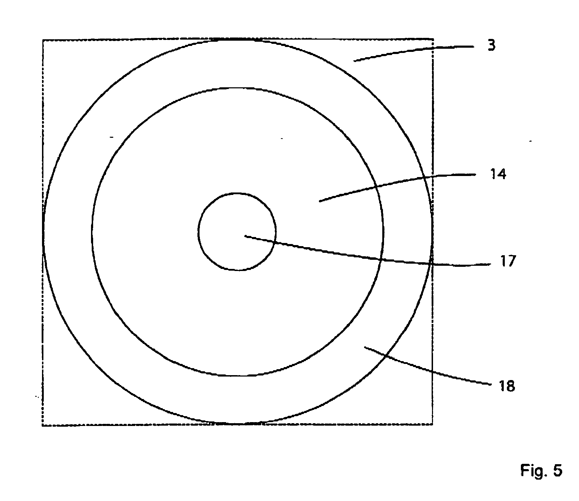

Dies ist vergrößert in Figur 3 dargestellt, in der schematisch eine Sensorhalterung 16 mit dem geneigten Sensor 1 dargestellt ist. Die Sensorachse 2 mit der Sensormesswelle trifft in dem ringförmigen Messbereich 14 auf das kalte Tiefziehmaterial 3 in dem Spannring 15. Das kalte Tiefziehmaterial 3 liegt in diesem Zustand in der durch den Spannring 15 gebildeten Ebene. Der ringförmige Messbereich 14 ist in der Figur 5 prinzipiell dargestellt, wobei mit der Bezugsziffer 17 ein äußerer Tiefziehmaterialbereich und mit der Bezugsziffer 18 ein innerer Tiefziehmaterialbereich dargestellt ist, der jeweils nicht zur berührungslosen Temperaturmessung geeignet ist. In dem Ausführungsbeispiel beträgt der Radius des inneren Bereiches 18 1 cm und die Breite des äußeren Bereiches 17 1,25 cm bei einem Radius des Spannringes von 5 cm.

Figur 4 schließlich zeigt das von dem Infrarotstrahler 6 erwärmte Tiefziehmaterial 3, das so weit durchhängt, dass die Infrarotsensorachse 2 mit dem Messbereich 14 einen rechten Winkel 19 einschließt. Damit wird dann, wenn die Tiefziehtemperatur erreicht ist, mit höchst möglicher Genauigkeit gemessen.

Das in dem Ausführungsbeispiel dargestellte erfindungsgemäße Dental-Druckformgerät ermöglicht eine höchst genaue Erfassung der tatsächlichen Tiefziehtemperatur unter Verwendung der üblichen mittelwelligen Strahler, die gegenüber kurzwelligen Strahlern mit wesentlich weniger Energie auskommen, keine Regelung der Strahlung und keine Filterung der kurzweiligen Strahlung erforderlich machen.

Nach dem Einschalten der Dental-Druckformvorrichtung über den Hauptschalter 12 kann der Anwender, der in den Spannring 15 der über die teleskopierbare Säule 5 ausgefahrenen Haltevorrichtung 4 die Tiefziehfolie 3 eingelegt und den Spannring 15 unter den Infrarotstrahler 6 geschwenkt hat, über den Bedienbildschirm 13 nach Abfrage die einliegende Folie angeben. Der Mikroprozessor ermittelt aus dem zugehörigen Speicher die hinterlegte Verarbeitungs-Tiefziehtemperatur der einliegenden Folie 3 und zeigt diese als Soll-Temperatur auf dem Bildschirm 13 an. Des Weiteren wird noch die aktuelle Ist-Temperatur, die der Infrarotsensor 1 ermittelt, angezeigt. Über den Bedienbildschirm 13 kann dann der Heizvorgang gestartet werden. Sobald die tatsächliche Temperatur nur noch 10 C von der Soll-Tiefziehtemperatur entfernt ist, wird bei diesem Ausführungsbeispiel ein akustisches Signal ausgegeben. Dieses Signal wird, je näher die tatsächliche Temperatur an die Soll-Tiefziehtemperatur herankommt, häufiger und auch lauter. Bei Erreichen der Soll-Tietziehtemperatur erfolgt ein Dauerton. Die Mikroprozessorsteuerung sorgt dafür, dass der Strahler 6 ab diesem Zeitpunkt nur soviel Intensität abgibt, dass die Soll-Tiefziehtemperatur gehalten wird. Mit dem Einschwenken der Haltevorrichtung 4 über den Formtopf 9 schaltet sich der Strahler 6 automatisch ab, und der Tiefziehvorgang kann in der bekannten Art und Weise per Überdruck oder Unterdruck durchgeführt werden.

## Patentansprüche

1. Dental-Druckformvorrichtung zum Einsatz in der dentalen Tiefziehtechnik mit einem Gehäuse (11) zur Aufnahme eines Formtopfes (9) zur Modellaufnahme, einer Einspannvorrichtung (4) für Tiefziehfolien (3), mit einer ringförmigen Halterung (15) zur Aufnahme der Tiefziehfolie (3), einer Heizeinrichtung (6) zum Erwärmen der Tiefziehfolien (3), wobei die Einspannvorrichtung (4) zumindest zwischen einer Heizstellung unter der Heizeinrichtung (6) und einer Tiefziehstellung über dem Formtopf (9) bewegbar ist, sowie mindestens einem Temperaturfühler (1) und einer elektronischen Steuer-/Regeleinrichtung für die Heizeinrichtung (6), **gekennzeichnet durch** einen unterhalb der Heizeinrichtung (6) am Gehäuse (11) angebrachten Infrarotsensor (1) als Temperaturfühler, der auf die dem Modell zugeordnete Seite der Tiefziehfolie (3) gerichtet ist, so dass er berührungslos die Temperatur der Tiefziehfolie (3) auf einer der Heizeinrichtung (6) abgewandten Seite der Tiefziehfolie (3) erfasst und der mit der Steuer- und Regeleinrichtung verbunden ist.

2. Dental-Druckformvorrichtung nach Anspruch 1 oder 2, **dadurch gekennzeichnet, dass** der Infrarotsensor (1) seitlich versetzt zu der Senkrechten durch den Mittelpunkt der ringförmigen Halterung (15) angeordnet ist, wenn diese sich unter der Heizeinrichtung (6) befindet.

3. Dental-Druckformvorrichtung nach einem der vorangegangen Ansprüche, **dadurch gekennzeichnet, dass** der Infrarotsensor (1) schräg angeordnet ist, so dass die Infrarotsensorachse (2) unter einem Winkel auf die von der Halterung (15) gebildete Einspannebene trifft.

4. Dental-Druckformvorrichtung nach Anspruch 3, **dadurch gekennzeichnet, dass** der Winkel im Bereich von 12 bis 16° liegt, vorzugsweise 14° beträgt.

5. Dental-Druckformvorrichtung nach einem der vorangegangenen Ansprüche, **dadurch gekennzeichnet, dass** die Infrarotsensorachse (2) in einem Ringbereich um den Mittelpunkt der von der Halterung (15) gebildeten Einspannebene trifft, wobei vorzugsweise der Abstand zum Rand 25 % und zur Mitte 20 % des Abstandes vom Rand zur Mitte der Halterung (15) beträgt.

6. Verfahren zum Betreiben einer Dental-Druckformvorrichtung zum Einsatz in der dentalen Tiefziehtechnik mit einem Gehäuse (11) zur Aufnahme eines Formtopfes (9) zur Modellaufnahme, einer Einspannvorrichtung (4) für Tiefziehfolien (3), mit einer ringförmigen Halterung (15) zur Aufnahme der Tiefziehfolie (3), einer Heizeinrichtung (6) zum Erwärmen der Tiefziehfolien (3), wobei die Einspannvorrichtung (4) zumindest zwischen einer Heizstellung unter der Heizeinrichtung (6) und einer Tiefziehstellung über dem Formtopf (9) bewegbar ist, sowie mit mindestens einem Temperaturfühler, der berührungslos die Temperatur der Tiefziehfolie (3) erfasst, und mit einer elektronischen Steuer-/Regeleinrichtung für die Heizeinrichtung (6) verbunden ist, **dadurch gekennzeichnet, dass** ein auf die dem Modell zugeordnete seite der liefzichfolie (3) gerichteter Infrarotsensor (1) als Temperaturfühler benutzt wird und dass mittels dem Infrarotsensor (1) die Temperatur der Tiefziehfolie (3) auf einer der Heizeinrichtung (6) abgewandten Seite gemessen und mit der in der mikroprozessorgesteuerten Regelungseinrichtung für die betreffende Tiefziehfolie gespeicherten Verarbeitungstemperatur verglichen wird.

7. Verfahren nach Anspruch 6, **dadurch gekennzeichnet, dass** die Temperatur der Tiefziehfolie (3) in einem Ringbereich (14) um den Mittelpunkt der Tiefziehfolie (3) in der Einspannvorrichtung (15) gemessen wird, der sowohl vom Mittelpunkt als auch vom Rand der Einspannvorrichtung entfernt ist, wobei vorzugsweise der Abstand zum Rand 25 % und zum Mittelpunkt ungefähr 20 % der Entfernung vom Rand zum Mittelpunkt beträgt.

8. Verfahren nach einem der vorangegangenen Ansprüche, **dadurch gekennzeichnet, dass** für das manuelle Tiefziehen vor Erreichen der Bearbeitungstemperatur der Tiefziehfolie ein akustisches und/oder optisches, vorzugsweise stärker werdendes Signal, vorzugsweise ab einer Differenz zu der Bearbeitungstemperatur von 10 °C, ausgegeben wird.

9. Verfahren nach einem der vorangegangenen Ansprüche, **dadurch gekennzeichnet, dass** die tatsächliche Temperatur der Tiefziehfolie (3), vorzugsweise auch die zu erreichende Verarbeitungstemperatur, über eine Anzeige (13) sichtbar gemacht wird.

## Claims

1. Dental press-forming apparatus for use in dental deep-drawing techniques, the said apparatus having a housing (11) for accommodating a moulding cup (9) for accommodating a pattern, a mounting device (4) for deep-drawing foils (3), a ring-shaped holder (15) for accommodating the deep-drawing foil (3), a heating device (6) for heating the deep-drawing foils (3), wherein the mounting device (4) is moveable at least between a heating position below the heating device (6) and a deep-drawing position above the moulding cup (9), as well as at least one temperature sensor (1) and one electronic control/regulating device for the heating device (6) **characterised by** an infrared sensor (1), as the temperature sensor, mounted below the heating device (6) on the housing (11), the said infrared sensor being directed onto the side of the deep-drawing foil (3) associated with the pattern such that it detects, in a contact-free manner, the temperature of the deep-drawing foil (3) on a side of the deep-drawing foil (3) that is remote from the heating device (6), and being connected to the control and regulating device.

2. Dental press-forming apparatus according to claim 1, **characterised in that** the infrared sensor (1) is disposed laterally offset relative to the vertical through the central point of the ring-shaped holder (15) when the said holder is situated below the heating device (6).

3. Dental press-forming apparatus according to one of the preceding claims **characterised in that** the infrared sensor (1) is disposed inclinedly such that the infrared sensor axis (2) contacts the mounting plane formed by the holder (15) at an angle.

4. Dental press-forming apparatus according to claim 3, **characterised in that** the angle is in the region of 12 to 16° and is preferably 14°.

5. Dental press-forming apparatus according to one of the preceding claims, **characterised in that** the infrared sensor axis (2) contacts in an annular region about the central point of the mounting plane formed by the holder (15), wherein the distance to the edge is preferably 25% of the distance from the edge to the centre of the mounting (15) and the distance to the centre is preferably 20% of the distance from the edge to the centre of the mounting (15).

6. Method for operating a dental press-forming apparatus for use in dental deep-drawing techniques, the said apparatus having a housing (11) for accommodating a moulding cup (9) for accommodating a pattern, a mounting device (4) for deep-drawing foils (3), a ring-shaped holder (15) for accommodating the deep-drawing foil (3), a heating device (6) for heating the deep-drawing foils (3), wherein the mounting device (4) is moveable at least between a heating position below the heating device (6) and a deep-drawing position above the moulding cup (9), as well as at least one temperature sensor, which, in a contact-free manner, detects the temperature of the deep-drawing foil (3), and is connected to an electronic control/regulating device for the heating device (6), **characterised in that** an infrared sensor (1) that is directed onto the side of the deep-drawing foil (3) associated with the pattern is used as the temperature sensor and **in that** by means of the infrared sensor (1) the temperature of the deep-drawing foil (3) is measured on a side remote from the heating device (6) and is compared to the processing temperature for the deep-drawing foil concerned stored in the microprocessor-controlled regulating device.

7. Method according to claim 6, **characterised in that** the temperature of the deep-drawing foil (3) is measured in an annular region (14) about the central point of the deep-drawing foil (3) in the mounting device (15) that is distanced from both the central point and also the edge of the mounting device, wherein the distance to the edge is preferably 20% of the distance from the edge to the central point and the distance to the central point is preferably approximately 20% of the distance from the edge to the central point.

8. Method according to one of the preceding claims, **characterised in that** for manual deep-drawing, before obtaining the processing temperature of the deep-drawing foil, an acoustic and/or optical signal is output, preferably becoming stronger and stronger, preferably from a point where the difference to the operating temperature is 10°C.

9. Method according to one of the preceding claims, **characterised in that** the actual temperature of the deep-drawing foil (3), preferably also the processing temperature to be obtained, is made visible by means of a display (13).

## Revendications

1. Dispositif dentaire de formage sous pression, à utiliser dans la technique de thermoformage dentaire, avec un boîtier (11) pour recevoir un pot de formage (9) destiné à recevoir le modèle, avec un dispositif de serrage (4) pour des feuilles à thermoformer (3) qui est doté d'un support annulaire (15) pour recevoir la feuille à thermoformer (3), avec un équipement de chauffage (6) pour chauffer les feuilles à thermoformer (3), sachant que le dispositif de serrage (4) peut être déplacé au moins entre une position de chauffage en dessous de l'équipement de chauffage (6) et une position de thermoformage au-dessus du pot de formage (9), et avec au moins un capteur de température (1) et un équipement électronique de commande/régulation pour l'équipement de chauffage (6),
**caractérisé par** un capteur infrarouge (1) installé sur le boîtier (11) en dessous de l'équipement de chauffage (6) comme capteur de température, qui est dirigé sur le côté de la feuille à thermoformer (3) qui est associé au modèle, de sorte qu'il enregistre sans contact la température de la feuille à thermoformer (3) sur un côté de la feuille à thermoformer (3) qui est opposé à l'équipement de chauffage (6), et qui est relié à l'équipement de commande et de régulation.

2. Dispositif dentaire de formage sous pression selon la revendication 1, **caractérisé en ce que** le capteur infrarouge (1) est disposé en étant décalé latéralement par rapport à la verticale passant par le centre du support annulaire (15) lorsque ce dernier se trouve en dessous de l'équipement de chauffage (6).

3. Dispositif dentaire de formage sous pression selon l'une des revendications précédentes, **caractérisé en ce que** le capteur infrarouge (1) est disposé en oblique, de sorte que l'axe (2) du capteur infrarouge rencontre sous un angle le plan de serrage formé par le support (15).

4. Dispositif dentaire de formage sous pression selon la revendication 3, **caractérisé en ce que** l'angle est compris entre 12 et 16°, de préférence est égal à 14°.

5. Dispositif dentaire de formage sous pression selon l'une des revendications précédentes, **caractérisé en ce que** l'axe (2) du capteur infrarouge est incident dans une région annulaire autour du centre du plan de serrage formé par le support (15), sachant que, de préférence, la distance par rapport au bord est égale à 25% et la distance par rapport au centre à 20% de la distance du bord au centre du support (15).

6. Procédé d'exploitation d'un dispositif dentaire de formage sous pression à utiliser dans la technique de thermoformage dentaire, avec un boîtier (11) pour recevoir un pot de formage (9) destiné à recevoir le modèle, avec un dispositif de serrage (4) pour des feuilles à thermoformer (3) qui est doté d'un support annulaire (15) pour recevoir la feuille à thermoformer (3), avec un équipement de chauffage (6) pour chauffer les feuilles à thermoformer (3), sachant que le dispositif de serrage (4) peut être déplacé au moins entre une position de chauffage en dessous de l'équipement de chauffage (6) et une position de thermoformage au-dessus du pot de formage (9), et avec au moins un capteur de température (1) qui enregistre sans contact la température de la feuille à thermoformer (3) et qui est relié à un équipement électronique de commande/régulation pour l'équipement de chauffage (6),
**caractérisé en ce qu'**on utilise comme capteur de température un capteur infrarouge (1) dirigé sur le côté de la feuille à thermoformer (3) qui est associé au modèle, et **en ce qu'**on mesure au moyen du capteur infrarouge (1) la température de la feuille à thermoformer (3) sur un côté opposé à l'équipement de chauffage (6), et on la compare à la température de traitement mémorisée pour la feuille à thermoformer concernée dans l'équipement de régulation commandé par microprocesseur.

7. Procédé selon la revendication 6, **caractérisé en ce qu'**on mesure la température de la feuille à thermoformer (3) dans une région annulaire (14) autour du centre de la feuille à thermoformer (3) dans le dispositif de serrage (15) qui est éloignée à la fois du centre et du bord du dispositif de serrage, sachant que, de préférence, la distance par rapport au bord est égale à 25% et la distance par rapport au centre à 20% de la distance du bord au centre.

8. Procédé selon l'une des revendications précédentes, **caractérisé en ce que**, pour le thermoformage manuel, avant l'atteinte de la température de traitement de la feuille à thermoformer, un signal acoustique et/ou optique est délivré de préférence à partir d'une différence de 10 °C par rapport à la température de traitement, de préférence un signal qui devient de plus en plus fort.

9. Procédé selon l'une des revendications précédentes, **caractérisé en ce que** la température effective de la feuille à thermoformer (3), et de préférence également la température de traitement à atteindre, est rendue visible au moyen d'un affichage (13).
